# FASCICULE DE BREVET EUROPEEN

(11) **EP 1 291 544 B1**
(45) Date de publication et mention de la délivrance du brevet: **27.07.2005**
(21) Numéro de dépôt: 02292135.7
(22) Date de dépôt: 29.08.2002
(51) Int. Cl.: F16F 1/38

(54) **Support antivibratoire et véhicule comportant un tel support**
Schwingungsdämpfendes Lager und Fahrzeug mit einem solchen Lager
Anti-vibration support and vehicle with such a support

(30) Priorité: 05.09.2001 FR 0111477
(43) Date de publication de la demande: 12.03.2003
(73) Titulaire: HUTCHINSON, 75008 Paris (FR)
(72) Inventeur: Salles, Olivier, 35133 Lecousse (FR); Paulet, Lory, 28200 Logron (FR)
(74) Mandataire: Burbaud, Eric

(56) Documents cités:
- DE-A- 19 613 212
- GB-A- 2 285 845
- US-A- 5 129 479
- PATENT ABSTRACTS OF JAPAN vol. 1998, no. 02, 30 janvier 1998 (1998-01-30) & JP 09 280314 A (BRIDGESTONE CORP;TOYOTA MOTOR CORP), 28 octobre 1997 (1997-10-28)
- PATENT ABSTRACTS OF JAPAN vol. 1999, no. 12, 29 octobre 1999 (1999-10-29) & JP 11 201209 A (BRIDGESTONE CORP), 27 juillet 1999 (1999-07-27)
- PATENT ABSTRACTS OF JAPAN vol. 2000, no. 06, 22 septembre 2000 (2000-09-22) & JP 2000 074131 A (HONDA MOTOR CO LTD;HOKUSHIN IND INC), 7 mars 2000 (2000-03-07)

## Description

La présente invention est relative aux supports antivibratoires et aux véhicules comportant de tels supports.

Plus particulièrement, l'invention concerne un support antivibratoire destiné à être interposé entre des premier et deuxième éléments rigides (par exemple, un bloc motopropulseur et une caisse de véhicule) pour supporter une charge permanente selon un premier axe vertical et amortir des vibrations entre les premier et deuxième éléments rigides au moins selon ledit premier axe, ce dispositif antivibratoire comprenant au moins :
- une première armature rigide qui s'étend longitudinalement selon un deuxième axe horizontal entre des première et deuxième extrémités et qui est destinée être fixée au premier élément rigide,
- une deuxième armature rigide destinée à être fixée au deuxième élément rigide,
- et un corps en élastomère reliant entre elles les première et deuxième armatures, ledit corps en élastomère étant adapté pour supporter ladite charge verticale permanente et pour amortir lesdites vibrations entre les premier et deuxième éléments rigides, une des première et deuxième extrémités de la première armature faisant saillie latéralement par rapport au corps en élastomère et par rapport à la deuxième armature, et présentant une première face d'extrémité destinée à venir abouter le premier élément rigide.

Le document FR-A-2 739 669 décrit un exemple d'un tel support antivibratoire, dans lequel les fixations de la deuxième armature sont disposées de façon à être symétriques l'une de l'autre par une rotation de 180 degrés autour du premier axe. Ainsi, lorsqu'il est nécessaire de fixer deux supports antivibratoires de ce type latéralement à droite et à gauche d'un bloc motopropulseur de véhicules, il est généralement possible d'utiliser deux supports identiques pour les côté droit et gauche. On diminue ainsi le coût de revient des supports antivibratoires, en permettant des fabrications en plus grande série.

Ceci n'est toutefois pas possible lorsque le cahier des charges impose une certaine orientation des supports antivibratoires dans le véhicule, par exemple lorsque les fixations de la deuxième armature sont disposées de façon différente à l'avant et à l'arrière de la deuxième armature.

La présente invention a notamment pour but de perfectionner encore les dispositifs antivibratoires du type précité, en permettant de fabriquer un seul modèle de support antivibratoire destiné à être fixé dans deux positions symétriques (par exemple sur les côtés droit et gauche d'un bloc motopropulseur de véhicule) même lorsque le cahier des charges impose une certaine orientation de la deuxième armature par rapport au deuxième élément rigide (par exemple la caisse du véhicule).

A cet effet, selon l'invention, un support antivibratoire du genre en question est essentiellement caractérisé en ce que la première armature est formée en deux pièces, savoir un corps principal rigide surmoulé par le corps en élastomère et une entretoise rigide indépendante du corps en élastomère, ladite entretoise s'étendant selon le deuxième axe entre ladite première face d'extrémité et une deuxième face d'extrémité, ledit corps principal s'étendant selon le deuxième axe entre une troisième face d'extrémité et une quatrième face d'extrémité,
et en ce que l'entretoise est adaptée pour se fixer par emboîtement sur le corps principal, soit dans une première position où la deuxième face de butée aboute la troisième face de butée, soit dans une deuxième position où la deuxième face de butée aboute la quatrième face de butée.

Grâce à ces dispositions, des supports antivibratoires identiques peuvent être utilisés dans des positions symétriques l'une de l'autre en emboîtant l'entretoise à l'une ou l'autre des deux extrémités du corps principal, ce qui permet par exemple d'utiliser des supports antivibratoires identiques pour fixer soit à gauche, soit à droite d'un bloc motopropulseur de véhicule même lorsque la deuxième armature est orientée par rapport au deuxième élément rigide.

Dans des modes de réalisation préférés de l'invention, on peut éventuellement avoir recours en outre à l'une et/ou à l'autre des dispositions suivantes :
- le corps principal de la première armature comporte des première et deuxième ouvertures, voisines respectivement des troisième et quatrième faces d'extrémité, ces deux ouvertures s'étendant parallèlement au deuxième axe et débouchant vers l'extérieur du corps principal respectivement dans deux directions opposées, l'entretoise comportant un pion saillant adapté pour s'emboîter sans jeu soit dans la première ouverture, soit dans la deuxième ouverture ;
- les première et deuxième ouvertures sont revêtues intérieurement d'une couche périphérique d'élastomère, moulée d'une seule pièce avec le corps en élastomère ;
- ladite couche périphérique d'élastomère forme des nervures faisant saillie radialement vers l'intérieur et s'étendant parallèlement au deuxième axe ;
- le corps principal de la première armature est percé d'un premier trou traversant qui s'étend selon le deuxième axe et l'entretoise est percée d'un deuxième trou traversant qui s'étend également selon le deuxième axe en correspondance avec le premier trou traversant lorsque ladite entretoise est fixée sur le corps principal ;
- le corps principal de la première armature comporte des premier et deuxième épaulements voisins respectivement des troisième et quatrième faces d'extrémité, et l'entretoise comporte un troisième épaulement, voisin de la deuxième face d'extrémité, le troisième épaulement étant adapté pour coopérer par butée, soit avec le premier épaulement, soit avec le deuxième épaulement, pour empêcher l'entretoise de tourner autour de son pion lorsqu'elle est fixée par emboîtement sur le corps principal de la première armature ;
- la deuxième armature comporte au moins des premier et deuxième organes de vissage montés respectivement sur des première et deuxième platines de fixation appartenant à la deuxième armature, la première platine de fixation étant perpendiculaire au premier axe et la deuxième platine de fixation étant perpendiculaire à un troisième axe qui est lui-même perpendiculaire aux premier et deuxième axes.

Par ailleurs, l'invention a également pour objet un véhicule comprenant :
- un bloc motopropulseur,
- une caisse,
- et au moins des premier et deuxième supports antivibratoires tels que définis ci-dessus, la deuxième armature de chacun des premier et deuxième supports antivibratoires étant fixée à la caisse, les entretoises des premier et deuxième supports étant fixées de part et d'autre du bloc motopropulseur, l'entretoise du premier support antivibratoire étant fixée au corps principal dudit premier support antivibratoire dans ladite première position et l'entretoise du deuxième support antivibratoire étant fixée au corps principal dudit deuxième support antivibratoire dans ladite deuxième position, les premier et deuxième supports antivibratoires étant identiques hormis la position de l'entretoise.

Avantageusement, la deuxième armature de chacun des premier et deuxième supports antivibratoires comporte des première et deuxième fixations solidarisées avec la caisse du véhicule, la première fixation étant disposée vers l'arrière de la deuxième fixation.

D'autres caractéristiques et avantages de l'invention apparaîtront au cours de la description suivante de deux de ses formes de réalisation, donnée à titre d'exemples non limitatifs, en regard des dessins joints.

Sur les dessins :
- la figure 1 est une vue partielle schématique d'un véhicule automobile équipé de supports antivibratoires selon une forme de réalisation de l'invention, reliant le bloc motopropulseur du véhicule à la caisse de ce véhicule,
- la figure 2 est une vue en perspective de l'un des supports antivibratoires du véhicule de la figure 1,
- la figure 3 est une vue de détail en perspective, montrant une entretoise appartenant au support antivibratoire de la figure 2,
- la figure 4 est une vue en bout du support antivibratoire de la figure 2,
- la figure 5 est une vue en coupe selon la ligne V-V de la figure 4,
- la figure 6 est une vue en perspective de l'un des supports antivibratoires arrière et d'une partie du bloc motopropulseur, dans une deuxième forme de réalisation de l'invention,
- et la figure 7 est une vue en coupe verticale du support antivibratoire de la figure 6, la coupe étant prise dans la direction transversale du véhicule.

Sur les différentes figures, les mêmes références désignent des éléments identiques ou similaires.

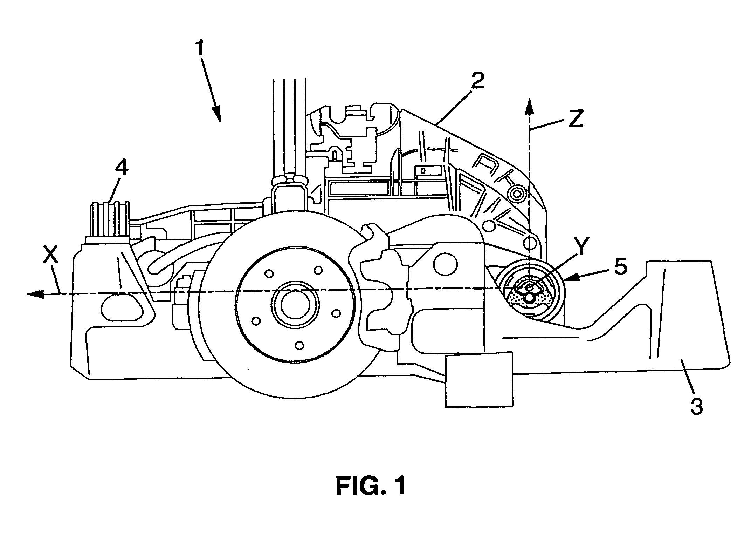

La figure 1 est une vue schématique partielle d'un véhicule automobile 1 dont le bloc motopropulseur 2 est supporté sur la caisse 3 du véhicule par l'intermédiaire de deux supports antivibratoires avant 4 et de deux supports antivibratoires arrière 5, disposés latéralement sur les côtés droit et gauche du bloc motopropulseur 2.

Les deux supports antivibratoires avant 4 sont d'un type connu dans l'art antérieur, et ne seront donc pas décrits ici.

Les deux supports antivibratoires arrière 5 sont constitués de pièces identiques, mais sont montés de façon symétrique par rapport au plan vertical médian du véhicule, comme il sera expliqué ci-après.

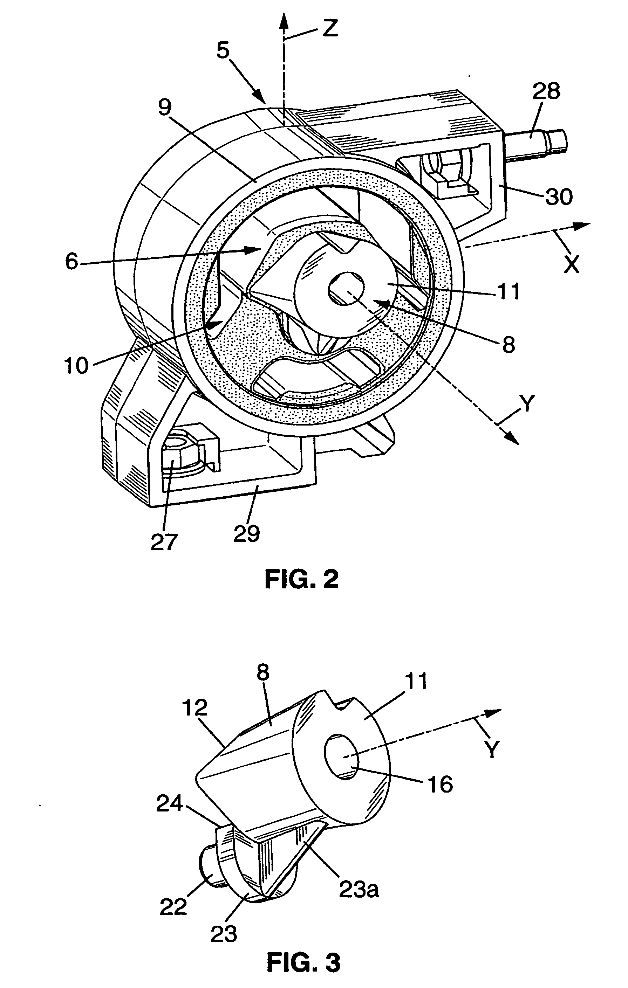

Les figures 2 à 5 représentent en détails le support antivibratoire arrière 5 qui est disposé du côté gauche du véhicule.

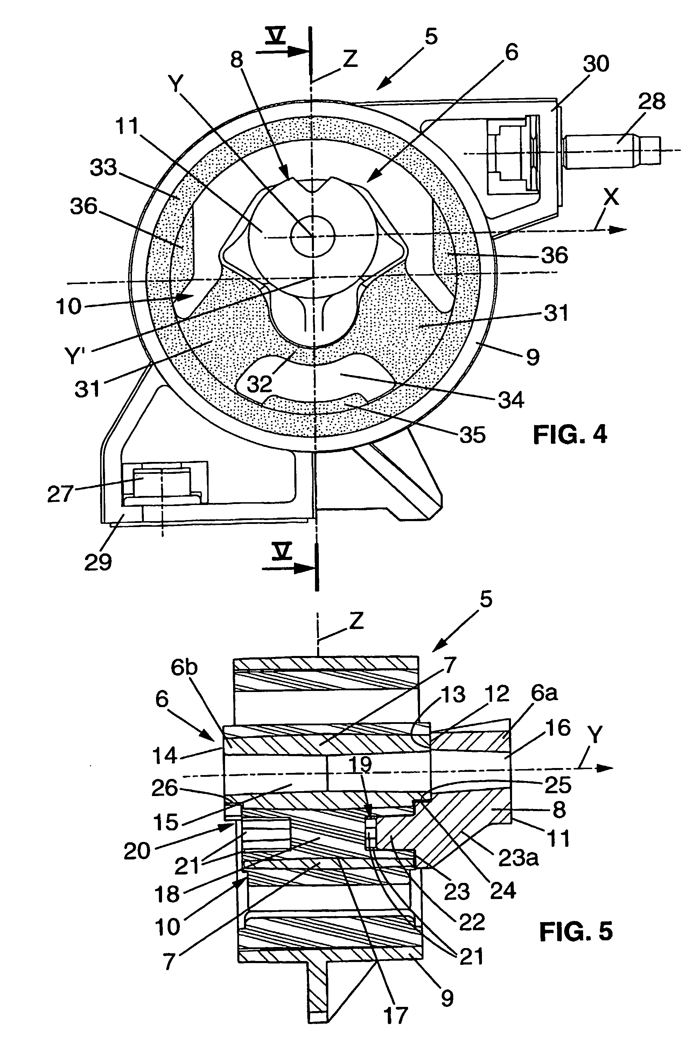

Ce support antivibratoire 5 comporte :
- une première armature métallique rigide 6 qui est destinée à être fixée par exemple au bloc motopropulseur 2 du véhicule et qui comprend elle-même un corps principal métallique 7 et une entretoise métallique 8,
- une deuxième armature métallique rigide 9 qui est destinée à être fixée par exemple à la caisse 3 du véhicule,
- et un corps en élastomère 10 reliant entre elles les première et deuxième armatures 6, 9, le corps en élastomère 10 étant adapté pour supporter la charge permanente du bloc motopropulseur 2, charge qui s'exerce selon un axe central vertical Z du support, et pour amortir et filtrer des mouvements vibratoires relatifs entre le bloc motopropulseur 2 et la caisse 3 du véhicule, principalement selon le premier axe Z susmentionné mais également selon un deuxième axe horizontal Y orienté transversalement par rapport au véhicule et selon un troisième axe X orienté longitudinalement par rapport au véhicule (voir figure 4).

Comme représenté plus en détails sur la figure 5, la première armature 6 s'étend longitudinalement entre d'une part, une première extrémité 6a qui est ici formée par l'entretoise 8 (en l'occurrence l'extrémité droite) et une deuxième extrémité 6b formée par l'extrémité du corps principal 7 située à l'opposé de l'entretoise 8 (en l'occurrence l'extrémité gauche).

L'entretoise 8 s'étend elle-même selon le deuxième axe Y entre :
- une première face d'extrémité 11 qui vient abouter le bloc motopropulseur 2 du véhicule, sur le côté gauche de ce bloc motopropulseur dans le cas du support gauche,
- et une deuxième face d'extrémité 12 qui vient abouter une troisième face d'extrémité 14 appartenant au corps principal 7, lequel corps principal s'étend jusqu'à une quatrième face d'extrémité 14, à l'opposé de l'entretoise 8.

Par ailleurs, le corps principal 7 et l'entretoise 8 sont percés de trous traversants, respectivement 15, 16 qui s'étendent selon l'axe Y et qui sont disposés en correspondance mutuelle, de façon à accueillir par exemple la tige d'une vis ou d'un boulon qui se visse sur le bloc motopropulseur 2 et dont la tête vient en appui direct ou indirect contre la face d'extrémité 14 susmentionnée.

Par ailleurs, le corps principal 7 de la première armature comporte, au-dessous du trou traversant 15, un deuxième trou traversant 17 qui s'étend parallèlement à l'axe Y et qui est partiellement rempli d'une masse d'élastomère 18 moulée d'une seule pièce avec le corps en élastomère 10 en délimitant des première et deuxième ouvertures 19, 20 débouchant à l'opposé l'une de l'autre respectivement au voisinage des troisième et quatrième faces d'extrémité 13, 14.

Ces première et deuxième ouvertures 19, 20 sont avantageusement délimitées latéralement par une couche périphérique d'élastomère appartenant à la masse d'élastomère 18 susmentionnée, laquelle couche périphérique d'élastomère peut avantageusement présenter des nervures 21 faisant saillie vers l'intérieur des ouvertures 19, 20 et s'étendant parallèlement à l'axe Y.

Chacune des ouvertures 19, 20 est adaptée pour recevoir, par emboîtement avec friction, un pion saillant 22 appartenant à l'entretoise 8. Lorsque l'entretoise 8 vient abouter la face d'extrémité 13 du corps principal 7, ce qui est le cas dans l'exemple représenté, le pion 22 est emboîté dans la première ouverture 19.

De plus, comme on peut le voir sur les figures 3 et 5, l'entretoise 8 comporte une paroi d'appui 23 qui s'étend perpendiculairement à l'axe Y et à partir de laquelle s'étend le pion 22. La paroi d'appui 23 est située sous le corps de l'entretoise 8 et est reliée à ce corps par une nervure 23a parallèlement aux axes Y et Z.

Cette paroi d'appui 23 vient en butée contre le corps principal 7 autour de l'ouverture 19, 20 dans laquelle est emboîté le pion 22 et de plus, ladite paroi d'appui 23 forme un épaulement supérieur 24 qui s'étend par exemple dans un plan horizontal et qui est adapté pour venir en butée contre un épaulement correspondant 25, 26 appartenant au corps principal 7. Lorsque l'entretoise 8 est aboutée à la face d'extrémité 13 du corps principal, comme dans l'exemple représenté, l'épaulement 24 vient en butée contre l'épaulement 25, alors que ledit épaulement 24 vient en butée contre l'épaulement 26 lorsque l'entretoise 8 est fixée de l'autre côté du corps principal 7.

L'emboîtement du pion 22 dans l'un ou l'autre des ouvertures 19, 20, ainsi que la butée de l'épaulement 24 avec l'un ou l'autre des épaulements 25, 26, permettent d'éviter toute rotation de l'entretoise 8 autour de la tige (non représentée) qui la traverse lorsque le support antivibratoire 5 est monté dans le véhicule. De plus, cet emboîtement et cette butée permettent également de fixer l'entretoise 8 sur le corps principal 7 avant de monter le support antivibratoire 5 dans le véhicule (l'épaulement 24 empêche alors la rotation de l'entretoise 8 autour du pion 22).

La deuxième armature 9, quant à elle, se présente dans l'exemple considéré ici sous la forme d'un cylindre métallique qui s'étend autour d'un axe Y' parallèle à l'axe Y (voir figure 4) et qui est solidaire d'une première platine de fixation arrière 29 et d'une deuxième platine de fixation avant 30 qui porte respectivement des première et deuxième fixations 27, 28.

Dans l'exemple considéré, la première platine de fixation 28 est perpendiculaire à l'axe Z tandis que la deuxième platine de fixation 30 est perpendiculaire à l'axe X, les première et deuxième fixations 27, 28 étant respectivement des organes de vissage d'axe Z et X.

Dans l'exemple représenté, la première fixation 27 est un écrou et la deuxième fixation 28 est un goujon fileté, mais bien entendu, d'autres fixations connues de l'homme du métier pourraient être utilisées.

Enfin, le corps en élastomère 10 du support antivibratoire comporte, dans l'exemple représenté (voir figure 4) :
- deux bras épais et résistants 31 qui sont disposés en forme de V inversé et qui s'étendent en divergeant vers le bas, depuis une partie centrale 32 surmoulée et adhérisée uniquement sur le corps principal 7 de la première armature, jusqu'à une couche d'élastomère périphérique 33 surmoulée et adhérisée à l'intérieur de la partie cylindrique de la deuxième armature 9, ces deux bras en élastomère délimitant au-dessous d'eux une alvéole 34,
- un bossage inférieur 35 en élastomère qui fait saillie dans l'alvéole 34 à partir de la couche périphérique 33 et qui sert de butée inférieure à la première armature 6,
- et deux bossages en élastomère 36 qui font saillie vers l'intérieur à partir de la couche périphérique 33 de part et d'autre de la première armature 6 et qui servent de butée pour cette première armature parallèlement à l'axe X.

Le support antivibratoire arrière 5 qui est disposé sur le côté droit du véhicule se différencie uniquement du support antivibratoire arrière gauche 5 par le fait que son entretoise 8 est aboutée sur la face d'extrémité 14 du corps principal 7 de la première armature, le pion 22 de l'entretoise étant emboîté dans l'ouverture 20 et l'épaulement 24 de l'entretoise étant en butée contre l'épaulement 26 du corps principal. Ainsi, l'entretoise 8 forme alors l'extrémité gauche 6b du support antivibratoire 5 et est fixée sur le côté droit du bloc motopropulseur, la première face d'extrémité 11 de ladite entretoise étant aboutée contre ledit bloc motopropulseur.

Grâce à ces dispositions, on peut utiliser une ligne de fabrication unique pour fabriquer les supports antivibratoires 5 droit et gauche, ces supports étant différenciés uniquement au moment du montage, par emboîtement de l'entretoise 8 d'un côté ou de l'autre du corps principal 7 de leur première armature. On diminue ainsi nettement le prix de revient des supports antivibratoires selon l'invention.

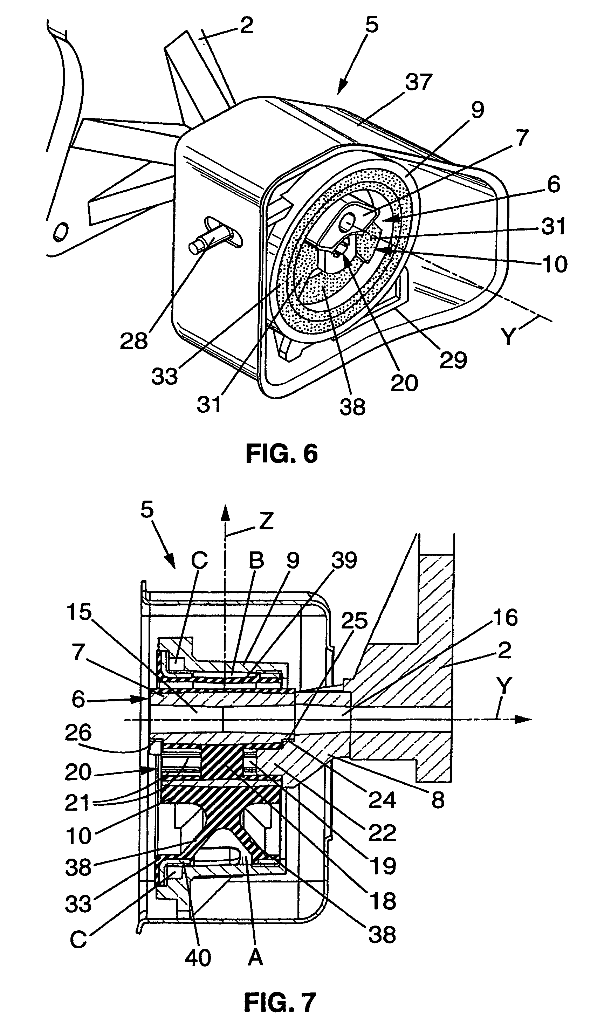

On notera que, bien que le support antivibratoire 5 décrit ci-dessus soit un support non hydraulique, l'invention serait également applicable à un support hydraulique ayant par exemple une architecture similaire au support du document FR-A-2 739 669 susmentionné ou une architecture telle que celle du support des figures 6 et 7.

Le support antivibratoire 5 des figures 6 et 7 est similaire à celui à celui des figures 1 à 5 et il est monté de la même façon dans le véhicule, de sorte qu'il ne sera pas décrit en détail ici.

Ce support antivibratoire se distingue de celui des figures 1 à 5 par les point suivants :
- il est entouré par un capot protecteur annulaire 37 en tôle lorsqu'il est monté dans le véhicule (cette disposition peut bien entendu être adoptée également pour le support antivibratoire des figures 1 à 5),
- les deux bras 31 du corps en élastomère 10 délimitent, avec deux parois 38 du même corps 10, une chambre de travail A remplie de liquide qui communique, par l'intermédiaire d'un canal étranglé C, avec une chambre de compensation B également remplie de liquide, de façon que les mouvements vibratoires relatifs entre le bloc motopropulseur 2 et la caisse 3 du véhicule (non représentée) provoquent des transferts de liquide entre les chambres A et B, ce qui amortit lesdits mouvements vibratoires.

Avantageusement la chambre de compensation B est délimitée entre la face intérieure de la deuxième armature 9 et une paroi souple 39 formée par une partie amincie de la couche périphérique 33 du corps en élastomère.

Ladite couche périphérique n'est pas surmoulée sur la deuxième armature 9, contrairement à la première forme de réalisation de l'invention, mais elle est surmoulée et adhérisée sur une cage métallique annulaire 40 ajourée, connue en soi dans les supports antivibratoires ayant cette architecture.

Grâce à la cage ajourée 40, le corps en élastomère peut être emboîté à force dans la partie cylindrique de la deuxième armature 9 (généralement dans un bain de liquide), après quoi on peut éventuellement rétreindre la deuxième armature 9. Ainsi, le corps en élastomère 10 est en contact étanche avec la deuxième armature 9, en délimitant avec celle-ci les chambres A, B et le canal C.

## Revendications

1. Support antivibratoire destiné à être interposé entre des premier et deuxième éléments rigides (2, 3) pour supporter une charge permanente selon un premier axe vertical (Z) et amortir des vibrations entre les premier et deuxième éléments rigides au moins selon ledit premier axe, ce dispositif antivibratoire comprenant au moins :
- une première armature rigide (6) qui s'étend longitudinalement selon un deuxième axe horizontal (Y) entre des première et deuxième extrémités (6a, 6b) et qui est destinée être fixée au premier élément rigide (2),
- une deuxième armature rigide (9) destinée à être fixée au deuxième élément rigide (3),
- et un corps en élastomère (10) reliant entre elles les première et deuxième armatures (6, 9), ledit corps en élastomère étant adapté pour supporter ladite charge verticale permanente et pour amortir lesdites vibrations entre les premier et deuxième éléments rigides (2, 3),
une des première et deuxième extrémités (6a, 6b) de la première armature faisant saillie latéralement par rapport au corps en élastomère (10) et par rapport à la deuxième armature (9), et présentant une première face d'extrémité (11) destinée à venir abouter le premier élément rigide (2),
**caractérisé en ce que** la première armature (6) est formée en deux pièces, savoir un corps principal rigide (7) surmoulé par le corps en élastomère (10) et une entretoise rigide (8) indépendante du corps en élastomère, ladite entretoise s'étendant selon le deuxième axe (Y) entre ladite première face d'extrémité (11) et une deuxième face d'extrémité (12), ledit corps principal (7) s'étendant selon le deuxième axe (Y) entre une troisième face d'extrémité (13) et une quatrième face d'extrémité (14),
**et en ce que** l'entretoise (8) est adaptée pour se fixer par emboîtement sur le corps principal (7), soit dans une première position où la deuxième face de butée (12) aboute la troisième face de butée (13), soit dans une deuxième position où la deuxième face de butée (12) aboute la quatrième face de butée (14).

2. Support antivibratoire selon la revendication 1, dans lequel le corps principal (7) de la première armature comporte des première et deuxième ouvertures (19, 20), voisines respectivement des troisième et quatrième faces d'extrémité (13, 14), ces deux ouvertures s'étendant parallèlement au deuxième axe (Y) et débouchant vers l'extérieur du corps principal (7) respectivement dans deux directions opposées, l'entretoise (8) comportant un pion saillant (22) adapté pour s'emboîter sans jeu soit dans la première ouverture (19), soit dans la deuxième ouverture (20).

3. Support antivibratoire selon la revendication 2, dans lequel les première et deuxième ouvertures (19, 20) sont revêtues intérieurement d'une couche périphérique d'élastomère, moulée d'une seule pièce avec le corps en élastomère (10).

4. Support antivibratoire selon la revendication 3, dans lequel ladite couche périphérique d'élastomère forme des nervures (21) faisant saillie radialement vers l'intérieur et s'étendant parallèlement au deuxième axe (Y).

5. Support antivibratoire selon l'une quelconque des revendications précédentes, dans lequel le corps principal (7) de la première armature est percé d'un premier trou traversant (15) qui s'étend selon le deuxième axe (Y) et l'entretoise est percée d'un deuxième trou traversant (16) qui s'étend également selon le deuxième axe (Y) en correspondance avec le premier trou traversant (15) lorsque ladite entretoise est fixée sur le corps principal.

6. Support antivibratoire selon l'une quelconque des revendications précédentes, dans lequel le corps principal (7) de la première armature comporte des premier et deuxième épaulements (25, 26) voisins respectivement des troisième et quatrième faces d'extrémité (13, 14), et l'entretoise comporte un troisième épaulement (26) voisin de la deuxième face d'extrémité (12), le troisième épaulement (26) étant adapté pour coopérer par butée, soit avec le premier épaulement (24), soit avec le deuxième épaulement (25), pour empêcher l'entretoise (8) de tourner autour de son pion lorsqu'elle est fixée par emboîtement sur le corps principal de la première armature.

7. Support antivibratoire selon l'une quelconque des revendications précédentes, dans lequel la deuxième armature (9) comporte au moins des premier et deuxième organes de vissage (27, 28) montés respectivement sur des première et deuxième platines de fixation (29, 30) appartenant à la deuxième armature (9), la première platine de fixation (29) étant perpendiculaire au premier axe (Z) et la deuxième platine de fixation (30) étant perpendiculaire à un troisième axe (X) qui est lui-même perpendiculaire aux premier et deuxième axes (Z, Y).

8. Véhicule comprenant :
- un bloc motopropulseur (2),
- une caisse (3),
- et au moins des premier et deuxième supports antivibratoires (5) selon l'une quelconque des revendications précédentes, la deuxième armature (9) de chacun des premier et deuxième supports antivibratoires étant fixée à la caisse (3), les entretoises (8) des premier et deuxième supports étant fixées de part et d'autre du bloc motopropulseur (2), l'entretoise (8) du premier support antivibratoire étant fixée au corps principal (7) dudit premier support antivibratoire dans ladite première position et l'entretoise (8) du deuxième support antivibratoire étant fixée au corps principal (7) dudit deuxième support antivibratoire dans ladite deuxième position, les premier et deuxième supports antivibratoires (5) étant identiques hormis la position de l'entretoise (8)

9. Véhicule selon la revendication 8, dans lequel la deuxième armature (9) de chacun des premier et deuxième supports antivibratoires comporte des première et deuxième fixations (27,28) solidarisées avec la caisse (3) du véhicule, la première fixation (27) étant disposée vers l'arrière de la deuxième fixation (28).

## Patentansprüche

1. Schwingungsdämpfendes Lager zum Anordnen zwischen einem ersten und einem zweiten starren Element (2, 3), um eine permanente Last entlang einer ersten vertikalen Achse (Z) zu tragen und Schwingungen zwischen dem ersten und dem zweiten starren Element zumindest entlang der ersten genannten Achse zu dämpfen, wobei diese schwingungsdämpfende Vorrichtung mindestens Folgendes enthält:
- eine erste starre Armatur (6), welche sich in Längsrichtung entlang einer zweiten horizontalen Achse (Y) zwischen einem ersten und einem zweiten Ende (6a, 6b) erstreckt und dazu bestimmt ist, an dem ersten starren Element (2) befestigt zu werden,
- eine zweite starre Armatur (9), welche dazu bestimmt ist, an dem zweiten starren Element (3) befestigt zu werden, und
- einen Elastomerkörper (10), welcher die erste und die zweite Armatur (6, 9) miteinander verbindet, wobei der Elastomerkörper dazu angepasst ist, die genannte vertikale permanente Last zu tragen und die genannten Schwingungen zwischen dem ersten und dem zweiten starren Element (2, 3) zu dämpfen,
wobei eines der beiden Enden (6a, 6b) der ersten Armatur seitlich in Bezug auf den Elastomerkörper (10) und in Bezug auf die zweite Armatur (9) vorspringt und eine erste Endfläche (11) aufweist, welche dazu bestimmt ist, an das erste starre Element (2) zu stoßen,
**dadurch gekennzeichnet, dass** die erste Armatur (6) aus zwei Teilen besteht, nämlich aus einem starren Hauptkörper (7), an welchem der Elastomerkörper (10) angeformt ist, und aus einem von dem Elastomerkörper unabhängigen Abstandsstück (8), welches sich entlang der zweiten Achse (Y) zwischen der genannten ersten Endfläche (11) und einer zweiten Endfläche (12) erstreckt, wobei der genannte Hauptkörper (7) sich entlang der zweiten Achse (Y) zwischen einer dritten Endfläche (13) und einer vierten Endfläche (14) erstreckt,
und dass das Abstandsstück (8) dazu angepasst ist, durch Aufstecken auf den Hauptkörper (7) entweder in einer ersten Stellung, bei der die zweite Anschlagfläche (12) an die dritte Anschlagfläche (13) stößt, oder in einer zweiten Stellung, bei der die zweite Anschlagfläche (12) an die vierte Anschlagfläche (14) stößt, befestigt zu werden.

2. Schwingungsdämpfendes Lager nach Anspruch 1, bei dem der Hauptkörper (7) der ersten Armatur eine erste und eine zweite Öffnung (19, 20) aufweist, welche der dritten bzw. der vierten Endfläche (13, 14) benachbart sind, wobei diese zwei Öffnungen sich parallel zur zweiten Achse (Y) erstrecken und in Richtung des Äußeren des Hauptkörpers (7) jeweils in zwei entgegengesetzten Richtungen münden, wobei das Abstandsstück (8) einen vorspringenden Zapfen(22) aufweist, welcher dazu angepasst ist, spielfrei entweder in die erste Öffnung (19) oder in die zweite Öffnung (20) gesteckt zu werden.

3. Schwingungsdämpfendes Lager nach Anspruch 2, bei dem die erste und die zweite Öffnung (19, 20) innenseitig mit einer Elastomer-Umfangsschicht überzogen sind, welche einstückig mit dem Elastomerkörper (10) geformt ist.

4. Schwingungsdämpfendes Lager nach Anspruch 3, bei dem die genannte Elastomer-Umfangsschicht Rippen (21) bildet, welche radial nach innen ragen und sich parallel zur zweiten Achse (Y) erstrecken.

5. Schwingungsdämpfendes Lager nach einem der vorhergehenden Ansprüche, bei dem der Hauptkörper (7) der ersten Armatur ein erstes Durchgangsloch (15) aufweist, welches sich entlang der zweiten Achse (Y) erstreckt, und das Abstandsstück ein zweites Durchgangsloch (16) aufweist, welches sich ebenfalls entlang der zweiten Achse (Y) mit dem ersten Durchgangsloch (15) übereinstimmend erstreckt, wenn das genannte Abstandsstück an dem Hauptkörper befestigt ist.

6. Schwingungsdämpfendes Lager nach einem der vorhergehenden Ansprüche, bei dem der Hauptkörper (7) der ersten Armatur einen ersten und einen zweiten Ansatz (25, 26) aufweist, welche der dritten bzw. der vierten Endfläche (13, 14) benachbart sind, und das Abstandsstück einen dritten Ansatz (26) aufweist, welcher der zweiten Endfläche (12) benachbart ist, wobei der dritte Ansatz (26) dazu angepasst ist, durch Anschlag entweder mit dem ersten Ansatz (24) oder mit dem zweiten Ansatz (25) zusammenzuwirken, um das Abstandsstück (8) daran zu hindern, um seinen Zapfen zu drehen, wenn es durch Aufstecken auf den Hauptkörper der ersten Armatur befestigt ist.

7. Schwingungsdämpfendes Lager nach einem der vorhergehenden Ansprüche, bei dem die zweite Armatur (9) mindestens ein erstes und ein zweites Schraubglied (27, 28) aufweist, welches auf einer ersten bzw. einer zweiten Befestigungsplatte (29, 30) montiert ist, welche zu der zweiten Armatur (9) gehören, wobei die erste Befestigungsplatte (29) senkrecht zu der ersten Achse (Z) und die zweite Befestigungsplatte (30) senkrecht zu einer dritten Achse (X) angeordnet ist, welche wiederum senkrecht zu der ersten und zu der zweiten Achse (Z, Y) verläuft.

8. Fahrzeug mit
- einem Motor-Getriebe-Block (2),
- einer Karosserie (3) und
- mindestens einem ersten und einem zweiten schwingungsdämpfenden Lager (5) nach einem der vorhergehenden Ansprüche, wobei die zweite Armatur (9) jedes der beiden schwingungsdämpfenden Lager an der Karosserie (3) befestigt ist, die Abstandsstücke (8) des ersten und des zweiten Lagers beidseitig des Motor-Getriebe-Blocks (2) befestigt sind, das Abstandsstück (8) des ersten schwingungsdämpfenden Lagers an dem Hauptkörper (7) des genannten ersten schwingungsdämpfenden Lagers in der ersten Stellung befestigt ist und das Abstandsstück (8) des zweiten schwingungsdämpfenden Lagers an dem Hauptkörper (7) des genannten zweiten schwingungsdämpfenden Lagers in der genannten zweiten Stellung befestigt ist, wobei das erste und das zweite schwingungsdämpfende Lager (5) ausschließlich der Stellung des Abstandstücks (8) identisch sind.

9. Fahrzeug nach Anspruch 8, bei dem die zweite Armatur (9) jedes der beiden schwingungsdämpfenden Lager eine erste und eine zweite Befestigung (27, 28) aufweist, welche mit der Karosserie (3) des Fahrzeugs fest verbunden sind, wobei die erste Befestigung (27) zum hinteren Teil der zweiten Befestigung (28) hin angeordnet ist.

## Claims

1. Anti-vibration support designed to be inserted between first and second rigid elements (2, 3) in order to support a first permanent load along a first vertical axis (Z) and absorb vibrations between the first and second rigid elements along at least said first axis, said anti-vibration device at least comprising:
- a first rigid brace (6) which extends longitudinally along a second horizontal axis (Y) between first and second ends (6a, 6b) and designed to be fixed to the first rigid element (2),
- a second rigid brace (9) designed to be fixed to the second rigid element (3),
- and an elastomer body (10) linking the first and second braces (6. 9) to one another, said elastomer body being adapted to support said permanent vertical load and to absorb said vibrations between the first and second rigid elements (2, 3),
one of which first and second ends (6a, 6b) of the first brace projects laterally out from the elastomer body (10) and from the second brace (9) and has a first end face (11) designed to sit in abutment with the first rigid element (2),
**characterised in that** the first brace (6) is made in two pieces, namely a main rigid body (7) with the elastomer body (10) moulded onto it and a rigid cross-member (8) independent of the elastomer body, which cross-member extends along the second axis (Y) between said first end face (11) and a second end face (12), said main body (7) extending along the second axis (Y) between a third end face (13) and a fourth end face (14),
and **in that** the cross-member (8) is adapted so that it can be fixed on the main body (7) in a locating arrangement, either in a first position in which the second abutment face (12) abuts with the third abutment face (13), or in a second position in which the second abutment face (12) abuts with the fourth abutment face (14).

2. Anti-vibration support as claimed in claim 1, in which the main body (7) of the first brace has first and second openings (19, 20), respectively adjacent to the third and fourth end faces (13, 14), these two openings extending parallel with the second axis (Y) and being open at the exterior of the main body (7) in two opposite directions, the cross-member (8) having a projecting pin (22) adapted to locate without any clearance either in the first opening (19) or in the second opening (20).

3. Anti-vibration support as claimed in claim 2, in which the first and second openings (19, 20) are internally faced with a peripheral layer of elastomer, moulded in a single piece with the elastomer body (10).

4. Anti-vibration support as claimed in claim 3, in which said peripheral elastomer layer forms ribs (21) projecting radially towards the interior and extending parallel with the second axis (Y).

5. Anti-vibration support as claimed in any one of the preceding claims, in which the main body (7) of the first brace incorporates a first through-hole (15) extending along the second axis (Y) and the cross-member incorporates a second through-hole (16) also extending along the second axis (Y) congruently with the first through-hole (15) when said cross-member is affixed to the main body.

6. Anti-vibration support as claimed in any one of the preceding claims, in which the main body (7) of the first brace has first and second shoulders (25, 26) adjacent respectively to the third and fourth end faces (13, 14) and the cross-member has a third shoulder (26) adjacent to the second end face (12), said third shoulder (26) being adapted to co-operate in an abutting arrangement with either the first shoulder (24) or with the second shoulder (235) in order to prevent the cross-member (8) from turning about its pin when located so as to be fixed to the main body of the first brace.

7. Anti-vibration support as claimed in any one of the preceding claims, in which the second brace (9) has at least first and second screwing members (27, 28) mounted respectively on first and second mounting plates (29, 30) belonging to the second brace (9), the first mounting plate (29) being perpendicular to the first axis (Z) and the second mounting plate (30) being perpendicular to a third axis (X), which is in turn perpendicular to the first and second axes (Z, Y).

8. Vehicle comprising:
- an engine block (2),
- a body (3),
- and at least first and second anti-vibration supports (5) as claimed in any one of the preceding claims, the second brace (9) of each of the first and second anti-vibration supports being fixed to the body (3), the cross-members (8) of the first and second supports being fixed on either side of the engine block (2), the cross-member (8) of the first anti-vibration support being fixed to the main body (7) of said first anti-vibration support in said first position and the cross-member (8) of the second anti-vibration support being fixed to the main body (7) of said second anti-vibration support in said second position, the first and second anti-vibration supports (5) being identical except for the position of the cross-member (8).

9. Vehicle as claimed in claim 8, in which the second brace (9) of each of the first and second anti-vibration supports has first and second fixing means (27, 28) anchored on the body (3) of the vehicle, the first fixing means (27) being disposed towards the rear of the second fixing means (28).
